# EUROPÄISCHE PATENTSCHRIFT

(11) **EP 2 491 469 B1**
(45) Veröffentlichungstag und Bekanntmachung des Hinweises auf die Patenterteilung: **17.05.2017**
(21) Anmeldenummer: 10775741.1
(22) Anmeldetag: 18.10.2010
(51) Int. Cl.: B66C 13/12, B66F 9/24, B64F 1/36, G05D 1/02

(54) **TRANSPORTSYSTEM ZUM HANDHABEN VON GEPÄCKSTÜCKEN IN DER GEPÄCKABWICKLUNG AUF FLUGHÄFEN**
TRANSPORT SYSTEM FOR HANDLING BAGGAGE IN BAGGAGE PROCESSING AT AIRPORTS
SYSTÈME DE TRANSPORT DESTINÉ À LA MANUTENTION DE BAGAGES POUR LE TRAITEMENT DES BAGAGES DANS LES AÉROPORTS

(30) Priorität: 22.10.2009 DE 102009050331
(43) Veröffentlichungstag der Anmeldung: 29.08.2012
(73) Patentinhaber: Siemens Aktiengesellschaft, 80333 München (DE)
(72) Erfinder: BACIC, Mato, 90453 Nürnberg-Krottenbach (DE); FIEDLER, Alexander, 90480 Nürnberg (DE); GLASS, Michael, 63110 Rodgau Nieder-Roden (DE); SCHUDERER, Christian, 91077 Neunkirchen (DE)
(86) Internationale Anmeldenummer: PCT/EP2010/065628
(87) Internationale Veröffentlichungsnummer: WO 2011/048048

(56) Entgegenhaltungen:
- US-A- 4 556 940
- US-A1- 2007 276 540
- US-A1- 2007 288 123

## Beschreibung

Die Erfindung betrifft ein Transportsystem zum Handhaben von Gepäckstücken in der Gepäckabwicklung auf Flughäfen nach dem Oberbegriff des Patentanspruchs 1.

Die angestrebte Standardisierung und Automatisierung auf den Flughäfen wurde bislang insbesondere für die Bereiche Gepäckannahme beim Abflug einerseits und Sortierung und Verladung im Flugzeug anderseits verwirklicht. Gepäckstücke werden heute in Gepäcksortieranlagen gehandhabt, die durch ein weit verzweigtes komplexes Netzwerk aus fest installierten fördertechnischen Anlagen bestehen. Diese werden über Weichen und Umsetzer o.ä. miteinander verknüpft, über die die Gepäckstücke rechnergesteuert zu den Zielorten gelenkt werden. Die Anlagen werden nach dem höchsten zu erwartenden Gepäckaufkommen ausgelegt und benötigen zum Transportieren und Sortieren der Gepäckstücke sehr viel Platz. Selbst bei geringem Gepäckaufkommen müssen große Anlagenbereiche betrieben werden; denn die momentan nicht benötigten Bereiche müssen für höheres Gepäckaufkommen vorgehalten werden, so dass sich insgesamt ein recht unflexibles raumgreifendes und auch teures System ergibt.

Aus der Patentanmeldung US 2007/0288123 A1 ist ein gattungsgemäßes Transportsystem bekannt.

Aufgabe der vorliegenden Erfindung ist es, ein Transportsystem zum Handhaben von Gepäckstücken in der Gepäckabwicklung auf Flughäfen schaffen, mit dem eine höhere Flexibilität, sowohl hinsichtlich des Anlagen- wie auch des Prozesslayouts erreicht werden und das aufgrund der Flexibilität den Raumbedarf und damit die Investitionskosten verringert.

Zur Lösung der Aufgabe wird erfindungsgemäß vorgeschlagen, dass die Trägerfahrzeuge unmittelbar im Check-In Bereich, gegebenenfalls von den eincheckenden Personen selbst, beladen werden. Der Passagier kann seinen Koffer beim Selbst-Check-In direkt auf das Trägerfahrzeug legen, das in einer Beladestation vorgefahren kommt. Über die persönlichen Daten, die beim Check-In in ein Terminal eingegeben werden und/oder am Gepäck auslesbar befestigt sind, erhält der Rechner die notwendigen Informationen, die er benötigt, um das Trägerfahrzeug zu seinem Bestimmungsort zu leiten.

Unter Verzicht auf eine starre installierte Fördertechnik werden stattdessen Trägerfahrzeuge für die Gepäckstücke verwendet, die diese individuell und flexibel zu ihren Zielorten bewegen. In der Regel wird jedes Trägerfahrzeug mit einem Gepäckstück beladen, das frei und autark innerhalb des Transportsystems verfahrbar ist.

Die Erfindung sieht in einer Ausgestaltung vor, dass die zum Speisen der Fahr- und Lenkantriebe und/oder zur Steuerung der Trägerfahrzeuge benötigte Energie den Trägerfahrzeugen berührungslos oder über Schleifleitungen zuführbar ist. Denkbar sind induktive am Boden verteilte Energiezuführungen oder Stromabnehmer über Kopf in der von Autoscooter-Anlagen bekannten Art.

Nach einer anderen Ausgestaltung der Erfindung wird vorgeschlagen, die zum Speisen der Fahr- und Lenkantriebe und/oder zur Steuerung der Trägerfahrzeuge benötigte Energie aus Energiespeichern zu entnehmen, die auf den Trägerfahrzeugen mitgeführt werden. Energiespeicher sind, beispielsweise in Form von Akkus, zum Antrieb autarker Fahrzeuge an sich bekannt und brauchen hier nicht weiter beschrieben zu werden.

Die den Trägerfahrzeugen berührungslos oder über Schleifleitungen zugeführte Energie kann erfindungsgemäß zum Laden der Energiespeicher eingesetzt wird. Auch ein kompletter Austausch der entleerten Energiespeicher gegen aufgeladene Energiespeicher in speziellen Stationen ist denkbar. Demgemäß sind nach einem Merkmal der Erfindung innerhalb des Transportsystems festgelegte Bereiche mit direkter Energiezufuhr zum Speisen der Fahr- und Lenkantriebe und/oder zum Laden von Energiespeichern vorgesehen. In den übrigen Bereichen kann das Trägerfahrzeug frei und unabhängig fahren.

Die Fahr- und Lenkantriebe der Trägerfahrzeuge werden erfindungsgemäß dezentral oder von einem zentralen Rechner gesteuert. Dazu weist nach der Erfindung jedes Trägerfahrzeug Sensoren zur Aufnahme von Fahrzeugdaten, Signalen und zur Wahrnehmung der Umgebung auf und ist mit einer Kommunikationseinrichtung versehen, um Sensordaten an den konfigurierbaren zentralen Rechner zur Verarbeitung weiterzuleiten. Im Rechner abgelegte und verarbeitete Daten zur Steuerung der Funktionen der Trägerfahrzeuge, insbesondere deren Fahrgeschwindigkeit und Fahrrichtung, im Wesentlichen auf Basis dieser Daten, sind über eine Kommunikationseinrichtung von dem zentralen Rechner auf das Trägerfahrzeugen übertragbar. Derart ausgerüstete Trägerfahrzeuge können innerhalb des Transportsystems zielgerecht bewegt und bedarfsgerecht den Zielorten zugeführt werden.

Besonders günstig ist es, wenn die Fahrantriebe der Trägerfahrzeuge mit omnidirektionalen Richtungsantrieben versehen sind. Omnidirektionale Antriebe sind an sich bekannte Antriebe mit einer speziellen Radkonstruktion, mit der ein Fahrzeug am Boden jederzeit in eine beliebige Richtung fahren kann. Die vom dezentralen oder zentralen Rechner vorgegebenen Lenkbewegungen machen das Trägerfahrzeug dadurch äußerst manövrierfähig.

Es ist natürlich auch denkbar, die Trägerfahrzeuge in einen dafür vorgesehenen Bereich der Anlage zu verfahren, wo eine automatische oder teilautomatische Be- und/oder Entladung oder Umladung durchführbar ist. So können die Gepäckstücke, beispielsweise mit Hilfe eines Roboters in ein ULD oder Dolly umgeladen werden, in denen das gesammelte Gepäck zum Flugzeug' transportiert wird.

Natürlich ist es auch vorteilhaft, wenn ohne Umladung, die Trägerfahrzeuge mit dem Gepäck auf dem Vorfeld, ggf. unmittelbar zum Flugzeug verfahrbar sind. In einem solchen Fall können die Trägerfahrzeuge vom Check-In direkt zum Flugzeug geleitet werden, aufwändige und raumgreifende Förderanlagen werden verzichtbar. Sinnvollerweise sind erfindungsgemäß die Fahrwege der Trägerfahrzeuge vom Passagierbereich zu trennen, um Unfälle zu vermeiden.

Der Vorteil der erfindungsgemäßen Lösung ist in der hohen Manövrierfähigkeit der individuellen Trägerfahrzeuge und damit Flexibilität des Transportsystems zu sehen. Für den Transport werden nur die tatsächlich benötigten Trägerfahrzeuge bewegt, so dass die Verfügbarkeit und der Energiebedarf an den tatsächlichen Transportbedarf sehr flexibel anpassbar sind. Der Raumbedarf einer Gepäckanlage lässt sich damit stark reduzieren. Durch den weitgehend automatischen Ablauf der Be- und Endladevorgänge und des Transportes selbst lassen sich erhebliche Personalkosten einsparen, die die Wirtschaftlichkeit der Anlage deutlich steigern.

Die wesentlichen Merkmale der Erfindung sind in der Zeichnung grob schematisch dargestellt. Es zeigt:
- Figur 1: ein Trägerfahrzeug mit aufliegendem Gepäckstück und Stromversorgung über eine Schleifleitung,
- Figur 2: ein Check-In Bereich eines Flughafens mit Ladezone und Fahrweg und
- Figur 3: eine Umladestation von einem Trägerfahrzeug in ein ULD

Mit 1 ist das Trägerfahrzeug bezeichnet, das auf Rädern 2 auf dem Boden 3 eines Flughafenvorfeldes und/oder einer in einem Gebäude angeordneten Gepäckförder- und Sortieranlage verfahrbar ist. Das Trägerfahrzeug 1 ist selbstfahrend, vorzugsweise elektrisch, angetrieben. Die Energiezufuhr erfolgt über in bestimmten Bereichen der Anlage vorgesehene Schleifleitung 9 über dem Trägerfahrzeug 1, von der die Energie mittels eines Stromabnehmers 6 abgenommen wird, der auf dem am Trägerfahrzeug 1 feststehend angeordneten Mast befestigt ist. Die abgegriffene Energie kann sowohl direkt zum Antrieb der Rädern 2 oder zum Aufladen der die Räder versorgenden Akkumulatoren 11 verwendet werden. Im letzteren Fall kann das Trägerfahrzeug 1 auch in Bereichen fahren, in denen keine Schleifleitungen 9 verlegt sind. Das Trägerfahrzeug 1 nimmt das Gepäckstück 4, einen Koffer, auf und ist drahtlos mit dem zentralen Rechner 8 verbunden, von dem aus alle Trägerfahrzeuge 1 kollisionsfrei gesteuert werden. Die vom zentralen Rechner 8 ausgesandten Signale werden, vom Trägerfahrzeug 1 aufgenommen und zusammen mit im Fahrzeug gespeicherten und von ihm empfangenen Signalen verarbeitet und ggf. zwischen dem zentralem Rechner 8 und Trägerfahrzeug 1 ausgetauscht. Die Räder 2 des Trägerfahrzeuges 1 sind omnidirektional antreibbar, d.h. eine Bewegung des Trägerfahrzeuges ist in allen Richtungen am Boden möglich.

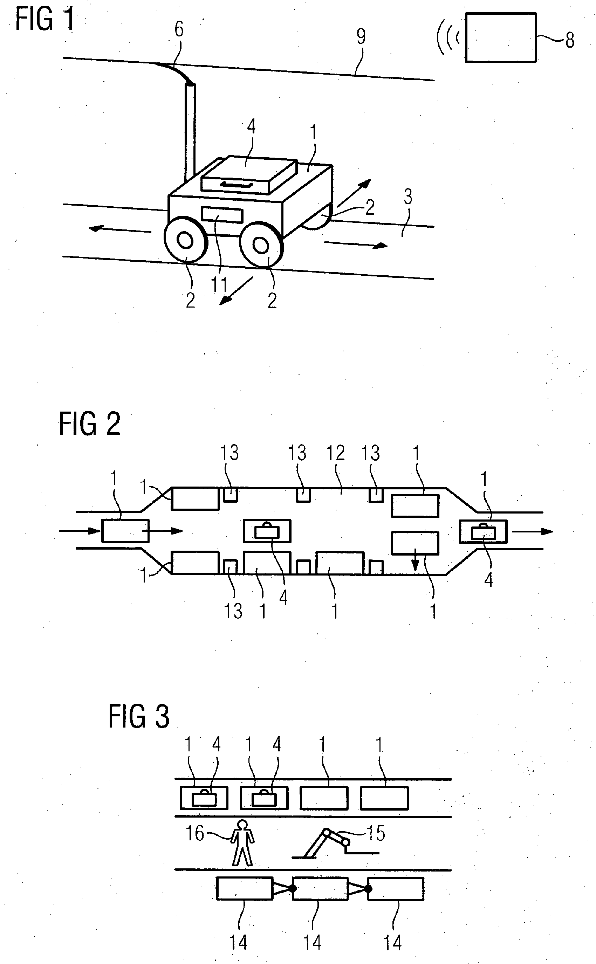

In Figur 2 ist grob schematisch der Check-In Bereich 12 eines Flughafens, der zum Self-Check-In der Passagiere ausgebildet ist, in einer Draufsicht dargestellt. In einem vom Passagierbereich abgegrenzten Bereich 12, der aber von den Passagieren erreichbar ist, werden die Trägerfahrzeuge 1zur Verfügung gestellt und können von den Passagieren mit Gepäckstücken 4 beladen werden. Der Passagier gibt die erforderlichen Fluginformationen in ein Lesegerät 13 ein und teilt dem Rechner 8 den Zielort seines Gepäcks 4 mit. Das Trägerfahrzeug 1 mit dem Gepäck 4 wird entsprechend gesteuert und fährt autark den Zielort an, der in Beispiel ein Dolly mit ULD 14 sein kann, wie in Figur 3 dargestellt. Das Gepäck 4 wird zielgerichtet neben das ULD 14 bewegt, von wo aus das Gepäck 4 automatisch 15 oder teilautomatisch 16 in das ULD 14 geladen wird. Eine Vorsortierung in der Anlage ist nicht erforderlich, weil die Sortierung durch Steuerung des Trägerfahrzeugs 1 zum Zielort direkt erfolgt. Natürlich kann das Gepäck 4 durch eine entsprechende Wegführung auch zum Flugzeug direkt geleitet werden, so dass sogar die Umladevorgänge entfallen.

## Patentansprüche

1. Flughafen mit einem Transportsystem zum Handhaben von Gepäckstücken in der Gepäckabwicklung auf dem Flughafen, bei dem die Gepäckstücke in Bereichen zwischen Check-In und Flugzeug transportiert werden, wobei für den Transport der Gepäckstücke (4), mindestens über einen Teilstreckenbereich, flurgebundene, automatisch gesteuerte und geführte lenkbare Trägerfahrzeuge (1) mit eigenem Fahrantrieb vorgesehen sind, **dadurch gekennzeichnet, dass**
die Trägerfahrzeuge unmittelbar im Check-In Bereich beladbar sind und auf den Trägerfahrzeugen (1) jeweils ein einzelnes Gepäckstück (4) dort direkt aufliegend vom Check-In Bereich zu einem festgelegten Zielort transportierbar ist.

2. Flughafen mit einem Transportsystem nach Anspruch 1, **dadurch gekennzeichnet, dass**
die zum Speisen der Fahr- und Lenkantriebe und/oder zur Steuerung der Trägerfahrzeuge (1) benötigte Energie den Trägerfahrzeugen (1) berührungslos oder über Schleifleitungen (9) zuführbar ist.

3. Flughafen mit einem Transportsystem nach Anspruch 1 und 2,
**dadurch gekennzeichnet, dass**
die zum Speisen der Fahr- und Lenkantriebe und/oder zur Steuerung der Trägerfahrzeuge (1) benötigte Energie aus Energiespeichern (11) entnommen wird, die auf den Trägerfahrzeugen (1) mitgeführt werden.

4. Flughafen mit einem Transportsystem nach Anspruch 2 oder 3,
**dadurch gekennzeichnet, dass**
die den Trägerfahrzeugen (1) berührungslos oder über Schleifleitungen (9) zugeführte Energie zum Laden der Energiespeicher (11) einsetzbar ist.

5. Flughafen mit einem Transportsystem nach einem der Ansprüche 1 bis 4,
**dadurch gekennzeichnet, dass**
innerhalb des Transportsystems festgelegte Bereiche mit direkter Energiezufuhr zum Speisen der Fahr- und Lenkantriebe und/oder zum Laden von Energiespeichern (11) vorgesehen sind.

6. Flughafen mit einem Transportsystem nach Anspruch 1 bis 5,
**dadurch gekennzeichnet, dass**
die Fahr- und Lenkantriebe der Trägerfahrzeuge (11) dezentral oder von einem zentralen Rechner gesteuert (8) werden.

7. Flughafen mit einem Transportsystem nach Anspruch 1 bis 6,
**dadurch gekennzeichnet, dass**
jedes Trägerfahrzeug (1) Sensoren zur Aufnahme von Fahrzeugdaten, Signalen und zur Wahrnehmung der Umgebung aufweist und mit einer Kommunikationseinrichtung versehen ist, um Sensordaten an den konfigurierbaren dezentral oder zentralen Rechner (8) zur Verarbeitung weiterzuleiten, wobei im zentralen Rechner (8) abgelegte und verarbeitete Daten zur Steuerung der Funktionen der Trägerfahrzeuge (1), insbesondere deren Fahrgeschwindigkeit und Fahrrichtung im Wesentlichen auf Basis dieser Daten über eine Kommunikationseinrichtung von dem zentralen Rechner (8) auf das Trägerfahrzeug (1) übertragbar sind.

8. Flughafen mit einem Transportsystem nach einem oder mehreren der Ansprüche 1 bis 7,
**dadurch gekennzeichnet, dass**
die Fahrantriebe der Trägerfahrzeuge (1) mit omnidirektionalen Richtungsantrieben versehen sind.

9. Flughafen mit einem Transportsystem nach einem der Ansprüche 1 bis 8,
**dadurch gekennzeichnet, dass** die Trägerfahrzeuge (1) in einen dafür vorgesehenen Bereich der Anlage verfahrbar sind, wo eine automatische (15) oder teilautomatische (16) Be- und/oder Entladung oder Umladung durchführbar ist.

10. Flughafen mit einem Transportsystem nach einem der Ansprüche 1 bis 9,
**dadurch gekennzeichnet, dass**
die Trägerfahrzeuge (1) auf dem Vorfeld, ggf. unmittelbar zum Flugzeug verfahrbar sind.

11. Flughafen mit einem Transportsystem einem der Ansprüche 1 bis 10,
**dadurch gekennzeichnet, dass**
die Fahrwege der Trägerfahrzeuge (1) vom Passagierbereich getrennt sind.

## Claims

1. Airport having a transport system for handling baggage in baggage processing at the airport, wherein the baggage will be transported in areas between check-in and aircraft, wherein for the transport of baggage (4), at least over a partial route area, floor-bound, automatically controlled and guided steerable carrier vehicles (1) are provided with their own traction drive,
**characterised in that**
the carrier vehicles can be loaded directly in the check-in area and in each case an individual piece of baggage (4) can be transported on the carrier vehicles (1), resting directly thereon, from the check-in area to a specified destination.

2. Airport having a transport system according to claim 1,
**characterised in that**
the energy required for feeding the traction and steering drives and/or for controlling the carrier vehicles (1) can be supplied to the carrier vehicles (1) contactlessly or via contact lines (9).

3. Airport having a transport system according to claim 1 and 2,
**characterised in that**
the energy required for feeding the traction and steering drives and/or for controlling the carrier vehicles (1) can be drawn from energy stores (11) which are also carried on the carrier vehicles (1).

4. Airport having a transport system according to claim 2 or 3,
**characterised in that**
the energy fed to the carrier vehicles (1) contactlessly or via contact lines (9) can be used to charge the energy stores (11).

5. Airport having a transport system according to one of claims 1 to 4,
**characterised in that**
specified areas with a direct power supply to feed the traction and steering drives and/or to charge energy stores (11) are provided within the transport system.

6. Airport having a transport system according to claim 1 to 5,
**characterised in that**
the traction and steering drives of the carrier vehicles (11) are controlled (8) locally or by a central computer.

7. Airport having a transport system according to claim 1 to 6,
**characterised in that**
each carrier vehicle (1) has sensors for recording vehicle data, signals and perception of the environment and is provided with a communication device in order to pass sensor data to the configurable local or central computer (8) for processing, wherein data stored and processed in the central computer (8) for controlling the functions of the carrier vehicles (1), in particular driving speed and driving direction thereof, can be transferred from the central computer (8) to the carrier vehicle (1) essentially on the basis of said data via a communication device.

8. Airport having a transport system according to one or more of claims 1 to 7,
**characterised in that**
the traction drives of the carrier vehicles (1) are provided with omnidirectional drives.

9. Airport having a transport system according to one of claims 1 to 8,
**characterised in that** the carrier vehicles (1) can be driven into an area of the site provided therefor, where an automatic (15) or semi-automatic (16) loading and/or unloading or transhipment can be performed.

10. Airport having a transport system according to one of claims 1 to 9,
**characterised in that**
the carrier vehicles (1) can be driven on the apron, if necessary directly to the aircraft.

11. Airport having a transport system according to one of claims 1 to 10,
**characterised in that**
the travel paths of the carrier vehicles (1) are separated from the passenger area.

## Revendications

1. Aéroport avec un système de transport permettant la manipulation de bagages dans le traitement des bagages à l'aéroport, dans lequel les bagages sont transportés dans des zones se trouvant entre l'enregistrement et l'avion, dans lequel pour le transport des bagages (4) sont prévus des véhicules porteurs (1) à commande automatique et guidés en site propre, au moins via une zone de trajet partiel avec leur propre mécanisme de traction, **caractérisé en ce que** les véhicules porteurs peuvent être chargés directement dans la zone d'enregistrement et respectivement un bagage individuel (4) peut être posé directement sur les véhicules porteurs (1) et transporté depuis la zone d'enregistrement jusqu'à une destination finale convenue.

2. Aéroport avec un système de transport selon la revendication 1 **caractérisé en ce que** pour l'alimentation des mécanismes de traction et de direction et/ou pour la commande des véhicules porteurs (1) l'énergie nécessaire peut être acheminée aux véhicules porteurs (1) sans contact ou via des lignes de contact (9).

3. Aéroport avec un système de transport selon les revendications 1 et 2, **caractérisé en ce que** pour l'alimentation des mécanismes de traction et de direction et/ou pour la commande des véhicules porteurs (1) l'énergie nécessaire est prélevée dans des accumulateurs d'énergie (11) qui sont transportés sur les véhicules porteurs (1).

4. Aéroport avec un système de transport selon les revendications 2 ou 3, **caractérisé en ce que** l'énergie acheminée aux véhicules porteurs (1) sans contact ou via des lignes de contact (9) peut être utilisée pour le chargement des accumulateurs d'énergie (11).

5. Aéroport avec un système de transport selon l'une des revendications 1 à 4, **caractérisé en ce que**, à l'intérieur du système de transport, des zones convenues sont prévues avec un apport d'énergie direct permettant l'alimentation des mécanismes de traction et de direction et/ou permettant le chargement d'accumulateurs d'énergie (11).

6. Aéroport avec un système de transport selon les revendications 1 à 5, **caractérisé en ce que** les mécanismes de traction et de direction des véhicules porteurs (11) sont commandés de manière décentralisée ou par un ordinateur central (8).

7. Aéroport avec un système de transport selon les revendications 1 à 6, **caractérisé en ce que** chaque véhicule porteur (1) présente des capteurs permettant l'enregistrement de données de véhicule, de signaux et permettant la perception de l'environnement immédiat et est doté d'un dispositif de communication pour transmettre des données de capteurs à l'ordinateur central ou configurable de manière décentralisée (8) en vue d'un traitement, dans lequel des données stockées et traitées dans l'ordinateur central (8) peuvent être transférées au véhicule porteur (1) par l'ordinateur central (8) en vue de la commande des fonctions des véhicules porteurs (1), en particulier de leur vitesse de déplacement et de leur direction de déplacement pour l'essentiel sur la base de ces données via un dispositif de communication.

8. Aéroport avec un système de transport selon l'une ou plusieurs des revendications 1 à 7, **caractérisé en ce que** les mécanismes de traction des véhicules porteurs (1) sont dotés de mécanismes de direction omnidirectionnels.

9. Aéroport avec un système de transport selon l'une des revendications 1 à 8, **caractérisé en ce que** les véhicules porteurs (1) peuvent être déplacés dans une zone du complexe prévue à cet effet, où un chargement et/ou un déchargement ou un transbordement automatique (15) ou partiellement automatique (16) peuvent être réalisés.

10. Aéroport avec un système de transport selon l'une des revendications 1 à 9, **caractérisé en ce que** les véhicules porteurs (1) peuvent être déplacés sur l'aire de stationnement, le cas échéant à proximité immédiate de l'avion.

11. Aéroport avec un système de transport selon l'une des revendications 1 à 10, **caractérisé en ce que** les voies de circulation des véhicules porteurs (1) sont séparées de la zone passagers.
